## Europäisches Patentamt
## European Patent Office
## Office européen des brevets

(19)

(11) Numéro de publication: **0 292 343**
**B1**

(12)

# FASCICULE DE BREVET EUROPEEN

(45) Date de publication du fascicule du brevet:
01.08.90

(51) Int. Cl.⁵: **F16K 27/07**

(21) Numéro de dépôt: **88400982.0**

(22) Date de dépôt: **21.04.88**

(54) Clapet de vidange de citerne, notamment de citerne calorifugée.

(30) Priorité: **23.04.87 FR 8705744**

(43) Date de publication de la demande:
**23.11.88 Bulletin 88/47**

(45) Mention de la délivrance du brevet:
**01.08.90 Bulletin 90/31**

(84) Etats contractants désignés:
**BE DE ES FR GB IT NL**

(56) Documents cités:
**DE-C- 540 669**
**US-A- 3 448 771**

(73) Titulaire: **MAGYAR S.A., Société Anonyme dite:,**
**13, Avenue Albert Premier, F-21004 Dijon(FR)**

(72) Inventeur: **Magyar, Georges, 13, Avenue Albert 1er,**
**F-21000 Dijon(FR)**

(74) Mandataire: **Jolly, Jean-Pierre et al, Cabinet BROT et**
**JOLLY 83, rue d'Amsterdam, F-75008 Paris(FR)**

ACTORUM AG

## Description

La présente invention concerne un clapet de vidange de citerne, notamment pour citerne calorifugée.

On connaît les clapets de vidange des citernes calorifugées de transport de liquides. Ces clapets disposés dans le fond de la citerne comportent une partie de commande du piston de clapet avec un volant de manoeuvre sur la partie haute de la citerne. Jusqu'à présent, ces clapets étaient montés sur la citerne avec la base de leur partie de commande solidaire de la tôle externe ou jaquette de citerne. Cette disposition a l'inconvénient de créer dans la citerne une cavité sousjacente à la base de la partie de commande, dont la profondeur est sensiblement égale à l'épaisseur d'isolation de la citerne. Cette cavité constitue une zone de nettoyage difficile pour les systèmes à pomme d'arrosage sous pression couramment employés dans les citernes. Elle forme inévitablement une zone de dépôt de salissures qui contribue à polluer les produits transportés. Dans le cas de transport de matières très réactives, cette zone peut, en outre, être la source de mélanges explosifs dangereux. L'invention vise à remédier à ces inconvénients.

On connaît par ailleurs par US-A-3 448 771, DE-C- 540 669, US-A-1 727 702 et US-A-1 918 184 des clapets pour citernes. Cependant, aucun de ces clapets n'est comparable à celui qui fait l'objet de la demande. L'invention propose en effet un clapet de vidange, notamment pour citerne calorifugée, du type dans lequel le piston de clapet est disposé dans la partie de fond de la citerne, comportant une partie de commande à volant de manoeuvre disposée sur la partie haute diamétralement opposée de la citerne, une tige d'actionnement reliant le piston de clapet à ladite partie de commande, clapet caractérisé en ce que la plaque de base de la partie de commande est solidarisée avec étanchéité à la tôle interne de citerne, cette plaque étant surmontée d'un élément tubulaire en forme de cheminée emergeant au moins de la tôle externe ou jaquette de citerne, sur laquelle il s'applique avec étanchéité périphérique.

Il résulte de cette disposition que la plaque de base de la partie de commande ferme la citerne en affleurement de la tôle interne, sans créer de cavité étrangère sujette au dépôt de salissures.

Ledit élément tubulaire est fermé à sa partie supérieure afin d'éviter l'accumulation d'eau et autres matières dans la chambre interne créée au dessus de la plaque de base et délimitée par sa paroi interne. Des moyens classiques de passage étanche de l'arbre du volant de manoeuvre (presse-étoupe par exemple) peuvent être employés au niveau de la paroi supérieure de fermeture de l'élément tubulaire.

Cependant, il est préférable d'utiliser un couvercle cylindrique pour fermer l'extrémité supérieure de l'élément tubulaire, ce couvercle étant solidarisé au volant de manoeuvre. Cette disposition permet le montage du presse-étoupe de passage d'arbre ou tige d'actionnement de la partie de commande sur la plaque de base, avec ses vis de serrage accessibles depuis la chambre interne de l'élément tubulaire. Ceci est important pour une maintenance aisée de l'étanchéité à ce niveau et facilite l'opération de dégazage de la citerne, le démontage du presse-étoupe, pouvant être effectué par simple démontage du volant de manoeuvre et du couvercle. On notera à ce sujet, que dans le cas des clapets classiques, l'implantation du presse-étoupe de passage de la tige d'actionnement de la partie de commande devait se faire par l'intérieur de la citerne, ce qui exigeait l'utilisation de clefs complexes pour leur montage et réglage.

Selon des caractéristiques avantageuses de l'invention, le couvercle est solidaire du volant de manoeuvre et coulisse verticalement par sa jupe le long de la paroi externe de l'élément tubulaire.

Un joint d'étanchéité est appliqué sur la périphérie de l'élément tubulaire à la base de la jaquette de citer- ne. En position de fermeture du clapet, le couvercle s'applique avec étanchéité par son bord inférieur sur ledit joint profilé. Cette disposition assure donc de manière très simple l'étanchéité du passage de l'élément tubulaire hors de la jaquette de la citerne ainsi que la fermeture étanche de l'élément tubulaire lui-même.

Le bord du couvercle a avantageusement une section arrondie (roulée) prévue pour venir en appui dans une gorge complémentaire formée sur ledit joint profilé. Etant donné que le couvercle vient en butée par son bord sur ledit joint profilé selon un mouvement hélicoïdal vertical (translation et rotation) ceci contribue à diminuer l'usure de la fermeture tout en assurant une parfaite fermeture.

Enfin, une bande fluorescente est disposée autour de l'élément tubulaire à la base de la jaquette de citerne de manière à permettre la surveillance depuis l'extérieur de la citerne de la bonne fermeture du clapet.

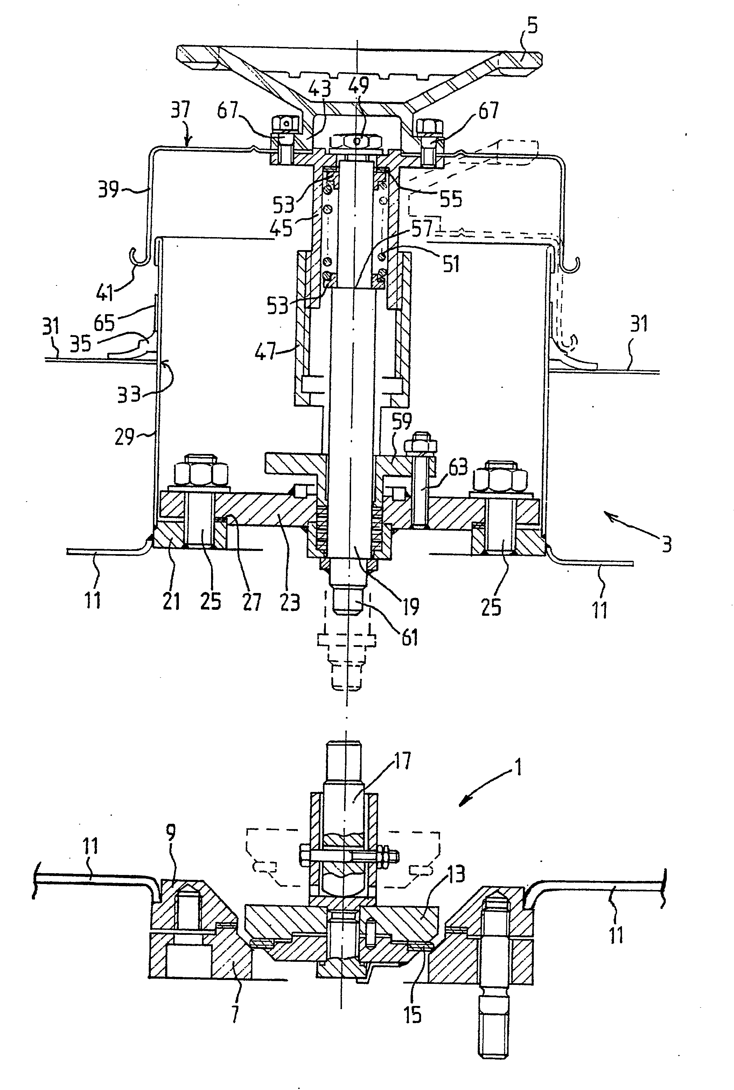

L'invention est décrite plus en détail ci-dessous à l'aide d'un exemple de réalisation et en référence au dessin annexé sur lequel :
la figure unique est une vue en coupe axiale d'un clapet de vidange selon l'invention.

Comme représenté sur cette figure, le clapet selon l'invention est constitué d'une partie-clapet 1 proprement dite disposée dans le fond de la citerne et d'une partie de commande 3 du clapet portant le volant de manoeuvre 5 à la partie haute opposée de la citerne. La partie de clapet 1 est constituée de façon classique d'un siège circulaire fixe 7 solidaire de la citerne (fixation par bride annulaire 9 soudée à la tôle de la citerne 11) et d'un piston complémentaire 13 muni d'un joint annulaire de clapet 15 mobile sur ledit siège 7. Le piston 13 est relié au niveau de sa tige axiale d'extrémité 17 à l'embout supérieur d'actionnement 19 de la partie de commande 3 par l'intermédiaire d'une tige rigide (non représentée) traversant verticalement la citerne.

La partie de commande 3 est solidarisée à la tôle interne de citerne 11 par une bride annulaire 21 soudée sur celle-ci. La plaque de base 23 de la partie de commande 3 est fixée serrée au moyen de vis 25 sur ladite bride 21 avec interposition d'un joint de bride 27. La bride annulaire 21 est surmontée d'un élément tubulaire ou cylindre 29 soudé périphériquement par son bord inférieur à la bride annulaire 21.

Ce cylindre 29 passe au travers de la jaquette 31 de citerne via un trou complémentaire 33 formé sur cette dernière. Un joint profilé 35 disposé autour du cylindre 29 à la base de la jaquette 31 assure l'étanchéité du passage. Le cylindre 29, ouvert à son extrémité supérieure, reçoit un couvercle 37 également cylindrique, lequel est monté avec sa jupe 39 coulissant extérieurement avec faible jeu sur le cylindre 29. Ce couvercle 37 s'appuie en position fermée par son bord inférieur roulé 41 sur ledit joint profilé 35. Le couvercle 37 est monté sur le volant de manoeuvre 5, serré entre la collerette de base 43 du volant 5 et une colonne inférieure 45 munie d'un filetage externe à sa partie inférieure. Cette colonne 45 est vissée dans un manchon support 47 muni d'un filetage interne. Ce manchon 47 est solidarisé à la plaque de base 23 par des pattes de fixation (non représentées). La colonne 45 et le manchon support 47 reçoivent coaxialement l'embout cylindrique d'actionnement 19 de la partie de commande. La partie supérieure filetée de cet embout est fixée serrée par un écrou 49 entre l'extrémité haute de la colonne 45 et un ressort de compensation 51. Ce ressort 51 s'appuie sur des guides de ressorts 53 à l'intérieur de la colonne 45. Le guide supérieur 53 vient en pression via un joint de friction 55 sur l'extrémité haute de la colonne 45. Le guide inférieur 53 s'appuie sur le talon annulaire 57 formé sur l'embout 19. La partie inférieure de l'embout traverse avec étanchéité la plaque de base 23 par l'intermédiaire d'un presse-étoupe 59 et son extrémité 61 est reliée à ladite tige rigide d'actionnement du clapet. Comme mentionné précédemment, le presse-étoupe 59 est monté à l'intérieur du cylindre 29 avec ses vis de serrage 63 au dessus de la plaque 23. Ces dernières sont donc accessibles après démontage du volant 5 et du couvercle 37.

Le fonctionnement du clapet est simple. La rotation du volant de manoeuvre 5 assure un mouvement hélicoïdal de vissage de la colonne 45 dans son manchon-support 47 et le fait monter ou descendre selon le sens de rotation. La position de fermeture du clapet correspond à la position basse extrême en trait interrompu où le couvercle 37 s'appuie par son bord 41 sur le joint profilé 35 et la position d'ouverture du clapet est celle en trait plein. Le couvercle 37 accompagne simplement le mouvement de rotation et translation verticale du volant 5. Le ressort de compensation 51 assure la mise en pression du piston du clapet 13 sur son siège 7 à la fermeture du clapet. En effet, juste après le positionnement du piston 13 sur son siège 7 (en trait plein) il reste encore au volant de manoeuvre 5 à effectuer une course verticale de quelques mm avant d'arriver à la fermeture définitive. Cette course supplémentaire produit l'action de compression sur le piston du clapet et empêche toute ouverture intempestive.

On notera que de nombreux arrangements peuvent être apportés au clapet de l'invention.

Ainsi, on peut disposer une bande fluorescente 65 autour de l'élément tubulaire 29 afin de surveiller la bonne fermeture du clapet depuis l'extérieur de la citerne.

En outre, on peut plomber les vis de serrage du volant de manoeuvre 67 et écrou 49 afin d'empêcher toute intrusion dans la citerne.

L'invention apporte ainsi un dispositif de commande pour clapet de vidange de citerne calorifugée, qui simplifie les opérations de nettoyage de ces citernes, notamment lors de changements fréquents de produits transportés et qui limite ainsi notablement les risques de pollution (voire de mélanges explosifs) desdits produits transportés.

**Revendications**

1.- Clapet de vidange, notamment pour citerne calorifugée, du type dans lequel le piston de clapet (13) est disposé dans la partie de fond de la citerne, comportant une partie de commande (3) à volant de manoeuvre (5) disposée sur la partie haute diamétralement opposée de la citerne, une tige d'actionnement reliant le piston de clapet (13) à ladite partie de commande (3), clapet caractérisé en ce que la plaque de base (23) de la partie de commande (3) est solidarisée avec étanchéité à la tôle interne de citerne (11), cette plaque (23) étant surmontée d'un élément tubulaire (29) en forme de cheminée émergeant au moins de la tôle externe ou jaquette de citerne (31), sur laquelle il s'applique avec étanchéité périphérique.

2.- Clapet de vidange selon la revendication 1, caractérisé en ce que l'élément tubulaire (29) est fermé avec étanchéité à sa partie supérieure.

3.- Clapet de vidange selon l'une des revendications 1 et 2, caractérisé en ce que l'élément tubulaire (29) est fermé par un couvercle cylindrique (37) complémentaire solidaire du volant de manoeuvre (5) et coulissant verticalement par sa jupe (39) le long de la paroi externe de l'élément tubulaire (29).

4.- Clapet de vidange selon l'une des revendications précédentes, caractérisé en ce qu'un joint profilé d'étanchéité (35) est appliqué sur la périphérie de l'élément tubulaire (29) à la base de la jaquette de citerne (31).

5.- Clapet de vidange selon la revendication 4, caractérisé en ce que le couvercle (37) s'applique avec étanchéité par son bord inférieur (41) en position de fermeture du clapet sur ledit joint profilé (35).

6.- Clapet de vidange selon l'une des revendications 4 et 5, caractérisé en ce que le bord inférieur (41) du couvercle (37) a une section arrondie prévue pour venir en appui dans une gorge complémentaire formée sur ledit joint profilé (35).

7.- Clapet de vidange selon l'une des revendications précédentes caractérisé en ce que le presse-étoupe (59) de la tige d'actionnement (19) de la partie de commande (3) est montée sur la plaque de base (23) avec des vis de serrage (63) disposées au-dessus de cette dernière.

8.- Clapet de vidange selon l'une des revendications précédentes, caractérisé en ce qu'une bande fluorescente (65) est disposée autour de l'élément tubulaire (29) à la base de la jaquette de citerne (31), de manière à permettre de vérifier depuis l'extérieur de la citerne la bonne fermeture du clapet.

## Patentansprüche

1. Entleerungsventil, insbesondere für einen Wärmeschutztank, wobei der Ventilkolben (13) im unteren Bereich des Tanks angeordnet ist, mit einem, ein Betätigungsrad (5) aufweisenden, im oberen, diametral entgegengesetzten Teil des Tanks angeordneten Steuerungsteil (3), einer, den Ventilkolben (13) mit dem Steuerungsteil (3) verbindenden Betätigungsstange, dadurch gekennzeichnet, daß die Grundplatte (23) des Steuerungsteils (3) dichtend mit dem Innenblech des Tanks (11) in Verbindung steht und daß die Grundplatte (23) von einem röhrenartigen, die Gestalt eines Schornsteins aufweisenden Bauelement (29) überragt wird, welches Bauelement wenigstens aus dem Außenblech oder dem Mantel (31) des Tanks herausragt, an welchem es im Umfangsbereich dichtend angesetzt ist.

2. Entleerungsventil nach Anspruch 1, dadurch gekennzeichnet, daß das röhrenartige Bauelement (29) an seinem oberen Bereich dichtend abgeschlossen ist.

3. Entleerungsventil nach Anspruch 1 oder 2, dadurch gekennzeichnet, daß das röhrenartige Bauelement (29) durch einen zylindrischen Deckel (37) verschlossen ist, welcher Deckel zusammenhängend mit dem zugehörigen Betätigungsrad (5) ausgebildet ist und mittels seines Kragens (39) in vertikaler Richtung entlang der Außenwandung des röhrenartigen Bauelementes (29) gleitfähig angeordnet ist.

4. Entleerungsventil nach einem der vorangegangenen Ansprüche, dadurch gekennzeichnet, daß auf der Umfangsseite des röhrenförmigen Bauelementes (29) eine Profildichtung (35) auf dem Mantel (31) des Tanks angeordnet ist.

5. Entleerungsventil nach Anspruch 4, dadurch gekennzeichnet, daß der Deckel (37) über seinen unteren Rand (41) im Schließzustand des Ventils dichtend auf der genannten Profildichtung (35) aufliegt.

6. Entleerungsventil nach einem der Ansprüche 4 oder 5, dadurch gekennzeichnet, daß der untere Rand (41) des Deckels (37) einen abgerundeten Abschnitt aufweist, der zur Aufnahme in einer zugehörigen Rille der Profildichtung (35) bestimmt ist.

7. Entleerungsventil nach einem der vorangegangenen Ansprüche, dadurch gekennzeichnet, daß die Stopfbüchse (59) der Betätigungsstange (19) des Steuerungsteils (3) über Druckschrauben (63), die oberhalb der Grundplatte (23) angeordnet sind, an letzterer befestigt ist.

8. Entleerungsventil nach einem der vorangegangenen Ansprüche, dadurch gekennzeichnet, daß auf dem röhrenarigen Bauelement (29) an desssen unterem, dem Mantel (31) des Tanks benachbarten Bereich ein fluoreszierendes Band (65) angeordnet ist, so daß von der Außenseite des Tanks dessen guter Schließzustand kontrollierbar ist.

## Claims

1. A drain valve, especially for a thermally insulated tank, of the type in which the valve piston (13) is arranged in the bottom part of the tank and comprising a control portion (3) with an operating wheel (5), which control portion (3) is arranged on the diametrically opposite upper part of the tank, and an actuating rod connecting the valve piston (13) to said control portion (3), said valve being characterized in that the base plate (23) of the control portion (3) is firmly and sealingly connected to the inner plate (11) of the tank, said base plate (23) being surmounted by a tubular member (29) emerging in the manner of a chimney at least from the external plate or jacket (31) of the tank, to which it is applied with peripheral tightness.

2. A drain valve according to claim 1, characterized in that the tubular member (29) is closed sealingly at its upper part.

3. A drain valve according to either one of claims 1 or 2, characterized in that the tubular member (29) is closed by a complementary cylindrical cover (37) integral with the operating wheel (5) and sliding vertically by means of its skirt (39) along the outer wall of the tubular member (29).

4. A drain valve according to any one of the preceding claims, characterized in that a shaped gasket (35) is applied to the periphery of the tubular member (29) at the base of the tank jacket (31).

5. A drain valve according to claim 4, characterized in that the cover (37) is applied sealingly by its lower edge (41) against said shaped gasket (35) when the valve is in the closed position.

6. A drain valve according to either one of claims 4 or 5, characterized in that the lower edge (41) of the cover (37) has a rounded section designed to come to rest in a complementary groove formed on said shaped gasket (35).

7. A drain valve according to any one of the preceding claims, characterized in that the stuffing box (59) of the actuating rod (19) of the control portion (3) is mounted on the base plate (23) with attachment screws (63) arranged above the latter.

8. A drain valve according to any one of the preceding claims, characterized in that a fluorescent strip (65) is arranged around the tubular member (29) at the base of the tank jacket (31) so as to make it possible to check from the outside of the tank whether the valve is properly closed.